Europäisches Patentamt

European Patent Office

Office européen des brevets

(11) Numéro de publication: **0 469 439 A1**

# DEMANDE DE BREVET EUROPEEN

(21) Numéro de dépôt: 91112366.9

(22) Date de dépôt: 24.07.91

(51) Int. Cl.⁵: **B24B 49/04**

(30) Priorité: 02.08.90 FR 9010018

(43) Date de publication de la demande:
05.02.92 Bulletin 92/06

(84) Etats contractants désignés:
CH DE ES GB IT LI

(71) Demandeur: MESELTRON S.A.
Avenue de Beauregard 16
CH-2035 Corcelles(CH)

(72) Inventeur: Xavier, Estève
Rue de la Gare 20
CH-2074 Marin(CH)

(74) Mandataire: de Raemy, Jacques et al
ICB Ingénieurs Conseils en Brevets SA
Passage Max. Meuron 6
CH-2001 Neuchâtel(CH)

(54) Dispositif pour la mesure de diamètres de pièces cylinriques en cours d'usinage.

(57) Le dispositif de mesure (1) permet l'autocalibrage de pièces cylindriques (2) en cours d'usinage et d'interrompre cet usinage lorsque une cote prédéterminée a été atteinte.

Il comporte une tête (5) présentant une ouverture en V s'appuyant sur la pièce à mesurer (2) et un capteur pneumatique (10) associé. Le système comporte des moyens de liaison (25, 26, 27, 29, 31, 32), d'appui (33, 34) et de soutien (39) de la tête pour assurer un contact permanent entre la pièce à mesurer et des touches (8, 9) portées par l'ouverture en Y.

Le dispositif offre une très faible épaisseur de sorte qu'il peut atteindre des zones étroites et profondes comme par exemple celles de portées cylindriques de vilebrequins.

Fig.1

L'invention est relative à un dispositif de mesure, notamment pour interrompre sur une machine-outil le processus d'usinage d'une pièce cylindrique quand ladite pièce a atteint un diamètre prédéterminé, le dispositif comportant :

- une tête présentant une ouverture munie de deux arêtes rectilignes disposées en forme de V et susceptibles de s'appuyer contre la pièce à usiner, ladite tête présentant deux faces parallèles sensiblement perpendiculaires à l'axe que présente la pièce à usiner, lesdites faces parallèles définissant l'épaisseur de la tête,
- un capteur monté sur cette tête et disposé selon la bissectrice de l'angle formé par les deux arêtes, ledit capteur livrant un signal représentatif du diamètre de ladite pièce cylindrique, la tête étant orientée par rapport à la pièce à usiner de telle manière que ladite bissectrice soit située dans un plan sensiblement parallèle à l'horizontale,
- des moyens de liaison de la tête à un socle solidaire du bâti que présente la machine pour assurer, pendant le processus d'usinage, le contact desdites arêtes avec ladite pièce cylindrique, lesdits moyens de liaison étant arrangés pour assurer la mobilité et le maintien de la tête dans un plan X-Y sensiblement perpendiculaire à l'axe que présente la pièce cylindrique à usiner,
- des moyens élastiques d'appui de la tête contre la pièce à usiner, et
- des moyens élastiques de soutien de la tête avec ses moyens de liaison sur le socle solidaire dudit bâti de la machine.

Il est connu de procéder à la mesure de diamètres de pièces cylindriques en cours d'usinage (in-process). C'est le cas par exemple de la tête de mesure appelée "Pinvar" (marque déposée) de la société italienne Marposs. Dans cette réalisation, le cylindre en rotation est palpé par deux touches diamétralement opposées. Une touche est fixe avec la tête de mesure. L'autre touche est mobile et se trouve à l'extrémité d'un levier articulé sur la tête. Ce système présente l'inconvénient de mettre en oeuvre des leviers mobiles qui prennent de la place par les paliers qu'ils exigent et par les dispositifs d'étanchéité nécessaires à leur bon fonctionnement. On est amené ainsi à une tête de mesure de grande épaisseur, soit de l'ordre de 18 mm. Cet appareil ne convient donc pas, par exemple, à une mesure in-process de portées cylindriques de vilebrequins de petites dimensions où la place disponible entre manetons est réduite à 10 mm par exemple.

Pour pallier cet inconvénient la présente invention fait appel de préférence à un capteur pneumatique qui peut être obtenu dans des diamètres ne dépassant pas 6 mm et qui est commercialisé, par exemple par la société américaine Bendix, fabricant des produits Sheffield. Le déposant de la présente invention a eu l'idée d'associer un tel capteur pneumatique à un dispositif, connu en soi, comportant une pièce en forme de gorge en V. Quand le cylindre à mesurer est engagé dans la gorge, il suffit de mesurer la distance entre l'arête du V et la surface du cylindre pour en déduire le diamètre du cylindre. On trouvera une description explicative de ce principe dans l'ouvrage "Taschenbuch der Längenmesstechnik", Springer Verlag, Berlin, 1954, p. 466 et 467. Une telle technique a été mise en oeuvre et décrite dans le document FR-A-2 570 487 émanant du déposant de la présente invention. Il s'agit là cependant d'un appareil pour mesures statiques de diamètres de pièces cylindriques. Bien que le document cité prévoit la possibilité pour la tête de mesure de venir s'appuyer et se centrer d'elle-même sous la pièce à mesurer, on ne trouve là aucun enseignement qui permettrait d'utiliser un tel système sur des cylindres en cours d'usinage et permettant l'autocalibrage desdits cylindres. Notamment, la présence de la meule interdit de disposer l'appareil de mesure sous la pièce cylindrique, mais oblige de disposer cet appareil face à la meule, ce qui pose des problèmes non résolus par le document cité, particulièrement celui de compenser le poids de la tête de l'appareil de mesure comme cela apparaîtra dans la description qui va suivre.

Le document DE-B-1 502 477 montre un dispositif de mesure où existent des moyens de liaison de la tête à un socle solidaire du bâti de la machine pour assurer le contact des arêtes de la tête avec la pièce à usiner, ces moyens de liaison assurant la mobilité et le maintien de la tête dans un plan X-Y sensiblement perpendiculaire à l'axe de la pièce à usiner. Ce même document présente également des moyens élastiques d'appui de la tête contre la pièce à usiner. On remarquera cependant que soit les moyens de liaison, soit les moyens élastiques d'appui ne sont pas confinés dans un espace délimité par le prolongement des deux faces parallèles définissant l'épaisseur de la tête. En particulier le document montre des moyens élastiques d'appui réalisés à l'aide de quatre lames verticales et flexibles. Ces lames se trouvent à l'évidence situées hors de l'espace délimité par l'épaisseur de la tête. Ces dispositions conduisent donc à une tête de grande épaisseur ne permettant pas d'atteindre des zones étroites et profondes comme c'est le cas dans les vilebrequins de petites dimensions évoqués ci-dessus. De plus, le dispositif du document cité ne prévoit aucun moyen élastique de soutien de la tête, cette tête appuyant de son propre poids sur la pièce à usiner, ce qui tend à user irrégulièrement les touches de la tête. Enfin on mentionnera que les lames-ressorts horizontales travaillent à la compression quand la tête appuie sur la pièce à usiner, cela nécessitant des lames épaisses et donc peu flexibles.

Le document GB-A-1 099 692 présente également des moyens de liaison assurant la mobilité et le maintien de la tête dans un plan X-Y, de même que des moyens élastiques d'appui de la tête contre la pièce à usiner. Cependant les moyens de liaison de la tête au bâti de la machine sont situés en dehors de l'épaisseur de la tête et contribuent donc à rendre cette tête plus large. De plus il n'existe aucun moyen élastique de soutien de la tête, ce qui amène l'usure évoquée au paragraphe ci-dessus.

Pour obvier aux inconvénients cités, le présent dispositif est caractérisé par le fait que ledit capteur, lesdits moyens de liaison, lesdits moyens élastiques d'appui et lesdits moyens élastiques de soutien se trouvent tous situés dans un espace délimité par le prolongement desdites deux faces parallèles définissant l'épaisseur de la tête.

L'invention va être exposée maintenant dans la description suivante qui utilise le dessin qui l'illustre à titre d'exemple, dessin dans lequel :

- la figure 1 est un dessin de principe du dispositif de mesure expliquant les bases sur lesquelles est fondée la présente invention,
- la figure 2 est un dessin reprenant une partie de la figure 1 et montrant en détail le fonctionnement d'un capteur préféré,
- la figure 3 est une vue en élévation d'une exécution préférée du dispositif de mesure selon l'invention, la tête représentée convenant pour des pièces à usiner de petit diamètre,
- la figure 4 montre une tête adaptable sur le dispositif de la figure 3, cette tête convenant pour des pièces à usiner de diamètre moyen,
- la figure 5 montre une tête adaptable sur le dispositif de la figure 4, cette tête convenant pour des pièces à usiner de grand diamètre, et
- la figure 6 est une vue de dessus d'un vilebrequin dans laquelle on a représenté trois dispositifs de mesure selon l'invention, deux de ces dispositifs étant en retrait et le troisième étant à cheval sur les portées cylindriques qu'il s'agit d'usiner.

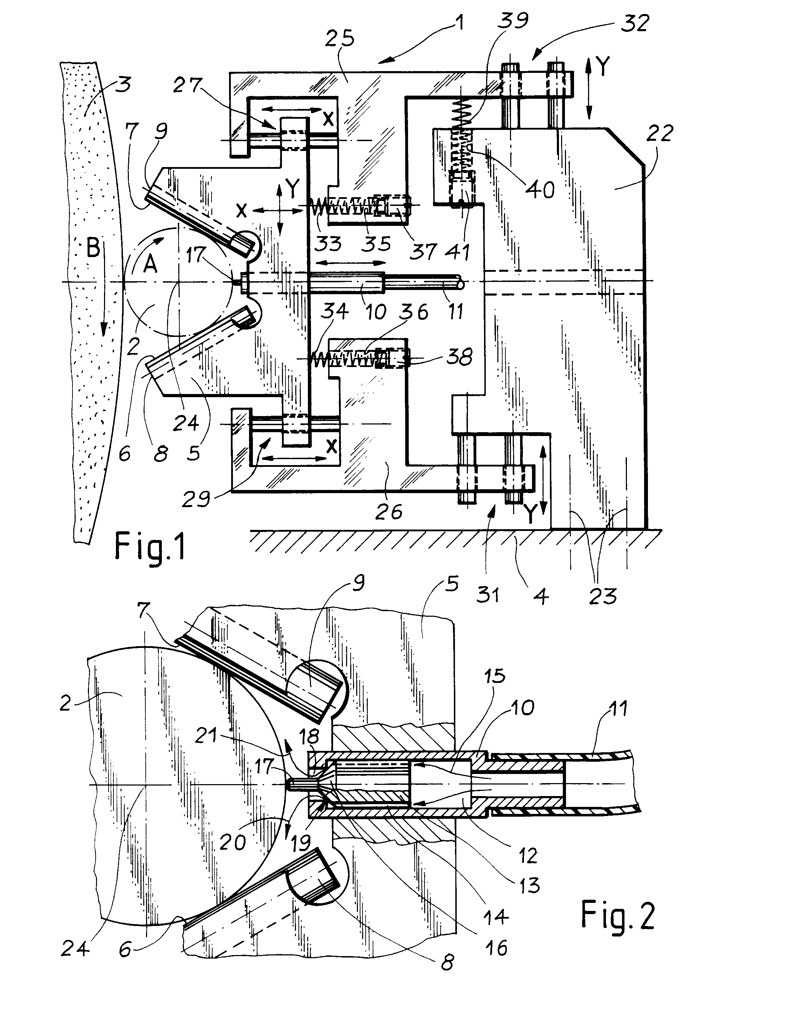

La figure 1, qui est un dessin de principe du dispositif de mesure 1 selon l'invention, montre en 2 la pièce cylindrique à usiner et en 3 la meule préposée à cet usinage. Le bâti de la machine outil est symbolisé par 4. La pièce à usiner 2 est entraînée, par exemple par un mandrin porte-pièce, dans le sens de la flèche A et la meule 3 est entraînée dans le sens de la flèche B. Quand le diamètre de la pièce 2 a atteint une cote prédéterminée, on éloigne la meule 3 de sorte que le processus d'usinage est interrompu.

Comme le montre la figure 1, le dispositif de mesure 1 comporte une tête 5 qui présente une ouverture munie de deux arêtes rectilignes 6 et 7 disposées en V. Les arêtes appuyent contre la pièce 2 et sont ici matérialisées par les génératrices de barreaux cylindriques ou touches 8 et 9 réalisés en matériau dur, du carbure de tungstène par exemple. Sur la tête 5 est monté un capteur 10 disposé selon la bissectrice de l'angle formé par les arêtes 6 et 7, ce capteur livrant, de façon connue en soi, un signal représentatif du diamètre de la pièce à usiner. On constate aussi que la tête 5 est orientée par rapport à la pièce à usiner de telle manière que cette bissectrice soit située dans un plan sensiblement parallèle à l'horizontale symbolisé ici par le bâti 4 de la machine.

La figure 2 montre en détail le capteur 10. Il s'agit ici d'un capteur pneumatique dit à fuite indirecte. De l'air 15 sous pression est insufflé dans le tuyau souple 11 qui est emmanché dans le capteur 10 proprement dit. Le capteur comporte une chambre 12 dans laquelle se meut un piston 13. Ce piston est pourvu de canaux 14 pour laisser passer l'air. Le piston se termine par un cône 16 et un palpeur 17. Quand le capteur est libre, le piston obture l'orifice 18 par appui du cône 13 sur un rebord 19 que présente cet orifice 18. Quand le piston 17 est repoussé vers la droite, ce qui se produit quand le diamètre de la pièce 2 diminue sous l'effet du travail de la meule, de l'air peut s'écouler selon les flèches 20 et 21. A ce moment le flux d'air varie, ce qui a pour conséquence de faire varier la pression qui est alors une mesure de la pénétration du palpeur dans le capteur.

Il s'agit donc, pendant le processus d'usinage, que la tête 5 appuye constamment contre la pièce 2 et surtout s'adapte aux inévitables mouvements relatifs de la pièce par rapport à la tête dus, par exemple, aux défauts de circularité ou de coaxialité de la pièce, à l'imprécision de positionnement de la tête de mesure, ou encore aux effets provoqués par la dilatation thermique. Cette adaptation est possible, selon la présente invention, grâce au fait que le dispositif de mesure comporte des moyens de liaison de la tête à un socle 22 solidaire du bâti 4, cette solidarité étant représentée schématiquement à la figure 1 par des axes de vis 23. Les moyens de liaison, qui seront décrits en détail ci-après, sont donc arrangés pour que la tête puisse être mobile en même temps que maintenue dans un plan X-Y sensiblement perpendiculaire à l'axe 24 de la pièce cylindrique à usiner. Les flèches X et Y apposés sur la tête 5 de la figure 1 matérialisent cette mobilité.

En plus des moyens de liaison de la tête dont il vient d'être question, moyens de liaison qui - on le rappelle - servent à adapter la tête aux mouvements relatifs de la pièce par rapport à la tête, il est nécessaire d'appuyer cette tête avec une certaine force contre la pièce à usiner, ce qui apparaîtra plus en détail par la suite.

Enfin la figure 1 montre que la tête, avec ses moyens de liaison associés, doit être soutenue par des moyens élastiques de soutien par rapport au socle 22 solidaire du bâti de la machine et cela pour compenser son propre poids.

Les moyens de liaison, d'appui et de soutien vont être discutés maintenant en s'aidant d'abord de la figure 1 qui n'est qu'un dessin de principe pour expliquer la présente invention.

Les moyens de liaison entre la tête 5 et le socle 22 comportent un élément supérieur 25 et un élément inférieur 26, ces éléments étant situés, le premier, au-dessus de l'axe 24 de la pièce à usiner et le second, au-dessous dudit axe. Chacun des éléments 25 et 26 est relié à la tête par l'intermédiaire de premiers moyens de guidage 27 et 29 permettant un déplacement horizontal X de la tête selon une course déterminée. L'élément supérieur 25 est relié à la tête 5 au moyen des premiers moyens de guidage 27 et l'élément inférieur 26 est relié à la tête 5 au moyen des premiers moyens de guidage 29. Chacun des éléments 25 et 26 est relié en outre au socle 22 solidaire du bâti 4 de la machine au moyen de seconds moyens de guidage 31 et 32 permettant un déplacement vertical Y de la tête 5 selon une course déterminée. Les courses selon X et Y ont été exagérées sur la figure 1 pour bien faire comprendre le mécanisme mis en oeuvre. Comme ces courses doivent prendre en compte l'adaptation de la tête 5 aux mouvement relatifs de la pièce par rapport à la tête, on comprendra qu'elles sont de petite amplitude, 1 à 2 mm tout au plus.

Les moyens élastiques d'appui de la tête contre la pièce à usiner doivent présenter une certaine force, par exemple de l'ordre de 2N. Celle-ci est assurée par des premiers ressorts 33 et 34 s'appuyant d'une part contre la tête 5 et d'autre part dans un logement 35, 36 pratiqué dans chacun des éléments supérieur 25 et inférieur 26. La figure 1 montre que cette force d'appui peut être ajustée au moyen des vis 37 et 38 que présentent les logements 35 et 36.

Enfin les moyens élastiques de soutien de la tête 5 avec ses moyens de liaison comprenant les éléments supérieur 25 et inférieur 26 comportent au moins un second ressort 39 appuyant contre l'élément supérieur 25 et situé dans un logement 40 pratiqué dans le socle 22. On comprend que ce second ressort compense le poids de la tête 5 et des éléments 25 et 26 qui lui sont associés. Ici aussi il a été prévu une vis 41 dans le logement 40 pour permettre le réglage de la force de soutien compensant le poids de la tête avec ses éléments associés.

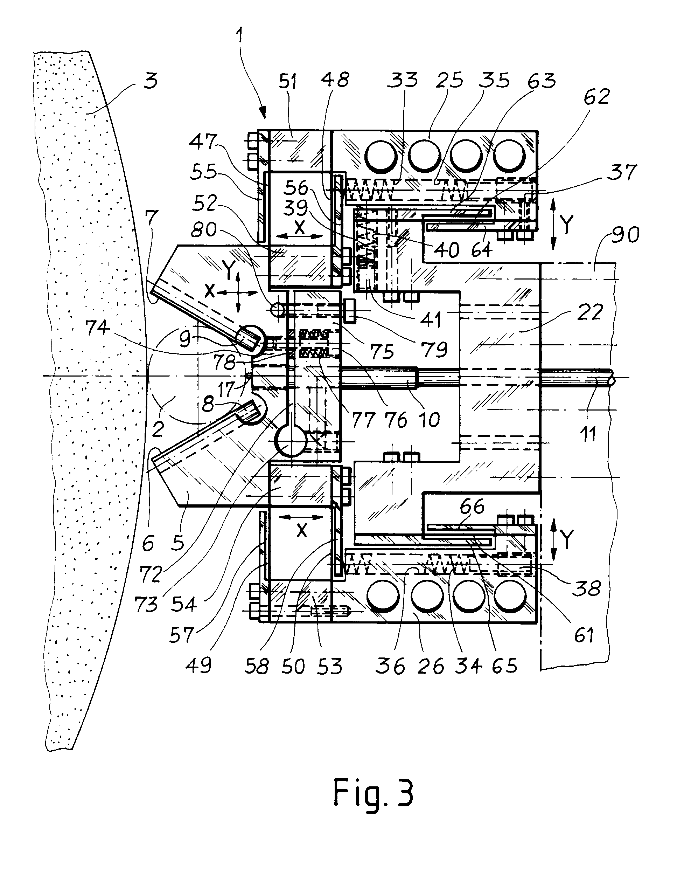

La figure 3 est une vue en élévation d'une exécution préférée de l'invention où l'on retrouve en principe tous les composants qui constituaient l'exécution schématique de la figure 1. Ainsi on retrouve dans la figure 3 les mêmes références que celles qui avaient été utilisées sur la figure 1 pour les composants semblables.

Par rapport à l'exécution schématique, l'exécution préférée de la figure 3 présente une différence importante. Les premiers moyens de guidage 27 et 29 ont été remplacés dans la figure 3 par des lames élastiques 47, 48, 49 et 50, la tête 5 étant reliée à l'élément supérieur 25 par les lames 47 et 48 et la même tête 5 étant relié à l'élément inférieur 26 par les lames 49 et 50. Ces lames sont espacées l'une de l'autre par des entretoises 51 et 52 du côté de l'élément supérieur 25 et par les entretoises 53 et 54 du côté de l'élément inférieur 26. Lames et entretoises sont fixées à la tête 5 et aux éléments 25 et 26 respectivement, par des vis visibles au dessin, mais non référencées. La figure 3 montre que ces vis servent également à fixer des talons 55 et 56, respectivement 57 et 58 qui sont utilisés comme limiteurs de course, particulièrement quand la tête n'est pas appliquée avec la force prescrite contre la pièce cylindrique à usiner. Les talons 56 et 58, faisant partie de la tête 5, servent également de point d'appui pour les premiers ressorts 33 et 34.

L'exécution préférée de la figure 3 montre aussi que les seconds moyens de guidage 31 et 32 de la figure 1 ont été remplacés dans la figure 3 par des lames élastiques 61 et 62 fixées d'un côté au socle 22 et de l'autre aux éléments inférieur et supérieur 26, 25 au moyen de vis visibles au dessin mais non référencées. Des talons 63, 64 et 65, 66 servent également de limiteurs de course pour les lames, particulièrement dans le cas où le dispositif se trouverait dans une autre position que celle montrée au dessus.

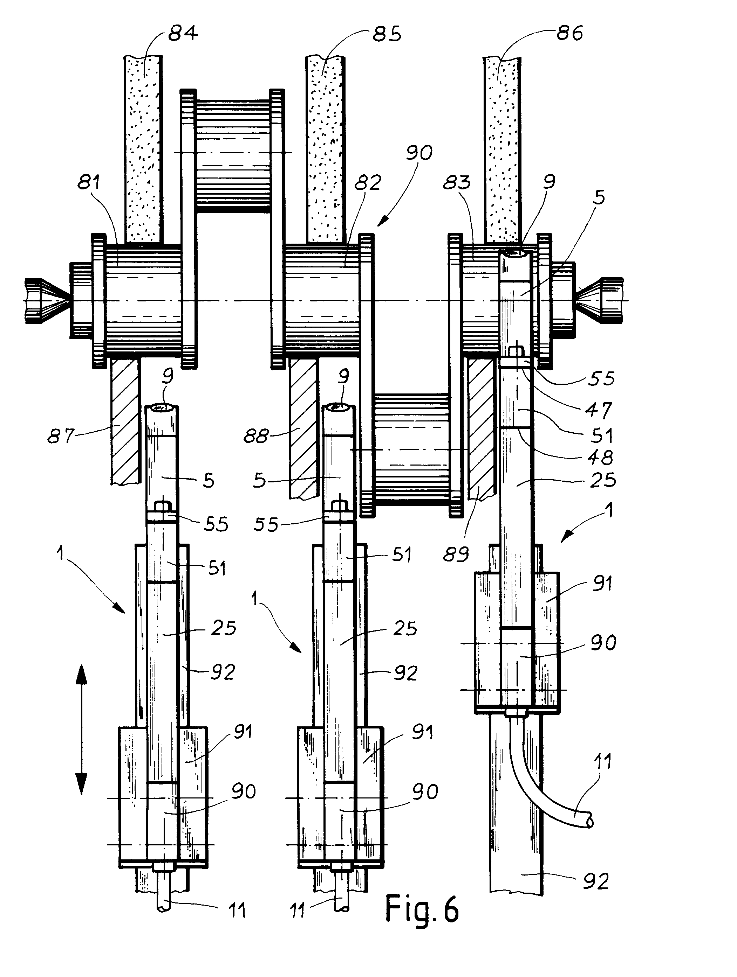

La figure 3 montre que le socle 22 est fixé au moyen de vis (dont les axes apparaissent sans être référencés) à une console 90, elle-même fixée à un chariot monté mobile dans une coulisse comme cela apparaîtra en figure 6.

L'utilisation de lames à la place des moyens de guidage utilisés en figure 1, présente plusieurs avantages importants. Celui d'abord de présenter un mouvement sans coincement, ni frottement, ni hystérèse. Celui surtout de proposer un dispositif rigide et sans jeu, selon une direction perpendiculaire au plan X et Y (axe Z).

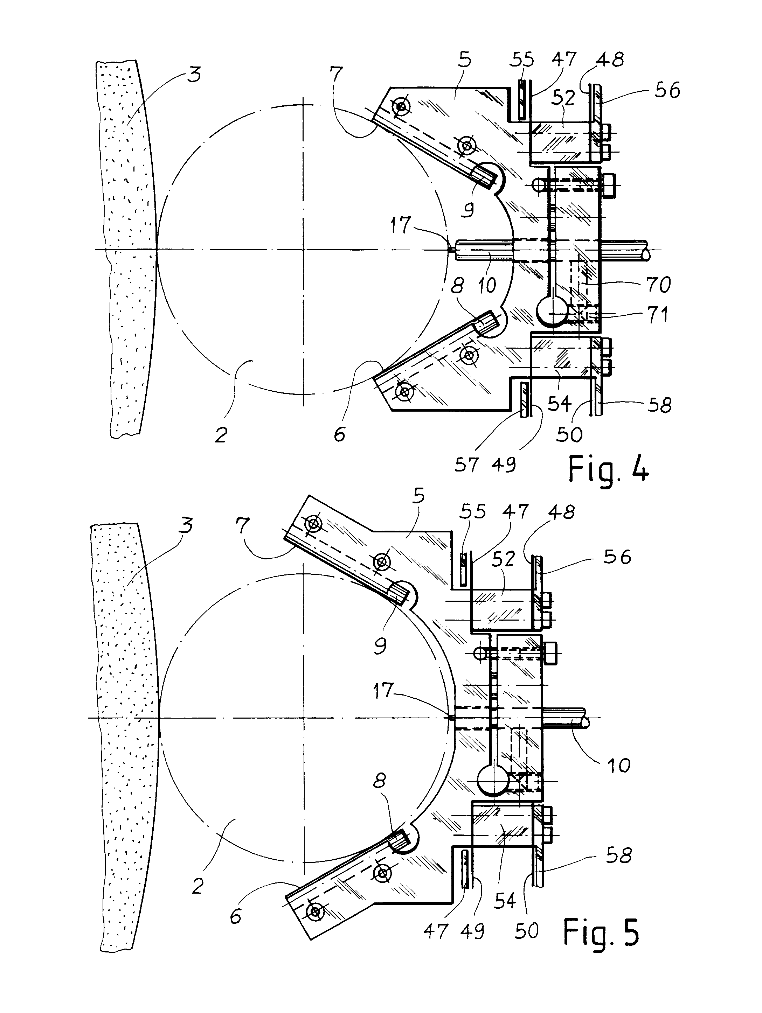

Si l'on a affaire à des pièces à usiner de diamètres très différents, le dispositif de mesure peut être offert en exécutions de diverses tailles, chaque exécution ne différant de l'autre que par les dimensions de sa tête, ce qui permet de garder le même équipement de base. On fera remarquer cependant que la tête, les éléments supérieur et inférieur et le socle étant assemblés au moyen de vis, il n'y a pas de difficulté insurmontable à changer la seule tête d'un équipement. Les figures 3, 4 et 5 montrent trois têtes qui peuvent être montées sur les mêmes éléments supérieur 25 et inférieur 26 et sur le même socle 22 pour couvrir des diamètres de pièces à usiner s'étendant de 30 à 125 mm. La tête de la figure 3 est utilisable pour des diamètres de 30 à 55 mm, celle de la figure 4, pour des diamètres de 55 à 90 mm et celle de la figure 5, pour des diamètres de 90 à 125 mm. Les figures 3 et 5 montrent des pièces à usiner dont le diamètre se trouve vers le minimum de ce qu'on peut envisager avec les têtes respectives (par exemple respectivement 30 et 90 mm). La figure 4 présente par contre une pièce à usiner se trouvant au maximum de capacité de la tête (par exemple 90 mm).

Les figures 4 et 5 font toucher du doigt la nécessité qu'il y a de pouvoir régler la pénétration du capteur 10 dans la tête 5. Un réglage grossier peut être fait en déplaçant à la main le capteur 10 et en le bloquant au moyen de la tige à bout conique 70 commandée par la vis 71 qui présente également un bout conique (voir figure 4). Un réglage fin du dépassement du capteur dans l'ouverture en V est également nécessaire pour procéder à l'étalonnement du dispositif de mesure. Pour cela on utilise le système apparaissant en entier à la figure 3. L'arrière de la tête 5 comporte une fente 72 et une lune 73 terminant cette fente de telle manière que l'arrière de la tête est séparé en un bloc avant 74 et un bloc arrière 75. Une vis 76, compressant un ressort 77, a tendance à rapprocher les deux blocs, ce rapprochement étant limité par une entretoise 78. Pour retirer le capteur en arrière, il faut ouvrir la fente 72 et donc visser une vis 79 qui s'appuie sur un arrêt 80 pratiqué dans le bloc avant.

Pour régler le dispositif, on procède généralement par comparaison. On présente à l'appareil une pièce étalon ayant la cote que l'on souhaite obtenir. On règle alors la pénétration du capteur de façon grossière, puis fine, en suivant ce qui a été dit plus haut. On s'arrange que pour cette pénétration soit émis le signal d'interruption d'usinage. Puis on remplace la pièce étalon par la pièce à usiner, le diamètre de cette dernière dépassant généralement de quelques dizièmes de millimètre la cote à atteindre. On appuie les touches 8 et 9 de la tête 5 contre la pièce à usiner jusqu'à ce que les lames 47, 48, respectivement 49, 50 soient à peu près verticales. A ce moment la force d'application de la tête contre la pièce est celle développée par les premiers ressorts 33 et 34 et l'usinage peut commencer. Il s'interrompra lorsque le diamètre sera celui donné par la pièce étalon.

La figure 6 est un exemple d'utilisation du dispositif de mesure selon l'invention. On a représenté ici un vilebrequin 90 dont il s'agit d'usiner les portées cylindriques 81, 82 et 83. Pour réduire le diamètre de ces portées, on utilise des meules 84, 85 et 86 dont la force d'appui est contrecarrée par des lunettes 87, 88 et 89. Pour la mesure du diamètre en cours d'usinage, on est en présence ici de zones étroites et profondes. L'accès à ces zones est grandement facilité par le dispositif de mesure selon l'invention, puisqu'il présente une très faible épaisseur. Si le capteur pneumatique présente un diamètre de l'ordre de 6 mm, il est alors possible d'offrir un dispositif ne dépassant pas 9 mm en largeur. En figure 6 on a présenté un dispositif 1 dont l'ouverture de la tête se trouve en prise avec le palier 83 et deux autres dispositifs 1 en retrait de la zone de mesure. On a déjà vu que le dispositif 1 est fixé à une console 90 elle-même fixée à un chariot 91. Le chariot 91 peut coulisser le long d'une glissière 92 et l'on peut retirer ainsi le dispositif en dehors du champ opératoire et même plus en retrait que ne le représente la figure. La figure 6 montre nettement que tout le dispositif n'excède pas l'épaisseur de la tête 5, soit le talon 55, les lames 47 et 48, l'entretoise 51, l'élément supérieure 25 et la console 90.

**Revendications**

1. Dispositif de mesure (1), notamment pour interrompre sur une machine outil le processus d'usinage d'une pièce cylindrique (2) quand ladite pièce a atteint un diamètre prédéterminé, le dispositif comportant :

   - une tête (5) présentant une ouverture munie de deux arêtes rectilignes (6, 7) disposées en forme de V et susceptibles de s'appuyer contre la pièce à usiner, ladite tête présentant deux faces parallèles sensiblement perpendiculaires à l'axe (24) que présente la pièce à usiner, lesdites faces parallèles définissant l'épaisseur de la tête,

   - un capteur (10) monté sur cette tête et disposé selon la bissectrice de l'angle formé par les deux arêtes, ledit capteur livrant un signal représentatif du diamètre de ladite pièce cylindrique, la tête étant orientée par rapport à la pièce à usiner de telle manière que ladite bissectrice soit située dans un plan sensiblement parallèle à l'horizontale,

   - des moyens de liaison (25, 26, 27, 29, 31, 32) de la tête à un socle (22) solidaire du bâti (4) que présente la machine pour assurer, pendant le processus d'usinage, le contact desdites arêtes avec ladite pièce cylindrique, lesdits moyens de liaison étant arrangés pour assurer la mobilité et le maintien de la tête dans un plan X-Y sensiblement perpendiculaire à l'axe (24) que présente la pièce cylindrique à usiner,
- des moyens élastiques d'appui (33, 34) de la tête contre la pièce à usiner, et
- des moyens élastiques de soutien (39) de la tête avec ses moyens de liaison sur le socle solidaire dudit bâti de la machine, caractérisé par le fait que ledit capteur (10), lesdits moyens de liaison (25, 26, 27, 29, 31, 32), lesdits moyens élastiques d'appui (33, 34) et lesdits moyens élastiques de soutien (39) se trouvent tous situés dans un espace délimité par le prolongement desdites deux faxes parallèles définissant l'épaisseur de la tête.

2. Dispositif selon revendication 1, caractérisé par le fait que le capteur (10) est un capteur pneumatique.

3. Dispositif selon la revendication 2, caractérisé par le fait que la tête comporte un dispositif de réglage grossier (70, 71) et un dispositif de réglage fin (75, 76) du capteur par rapport à la pièce à usiner.

4. Dispositif selon la revendication 1, caractérisé par le fait que les moyens de liaison comportent un élément supérieur (25) et un élément inférieur (26) situés, le premier, au-dessus de l'axe (24) de la pièce à usiner et le second, au-dessous dudit axe, lesdits éléments étant reliés à ladite tête par l'intermédiaire de premiers moyens de guidage (27, 29) permettant un déplacement horizontal X de la tête selon une course déterminée, lesdits éléments étant en outre reliés au socle (22) solidaire du bâti (4) de la machine par l'intermédiaire de seconds moyens de guidage (31, 32) permettant un déplacement vertical Y de la tête selon une course déterminée, que les moyens élastiques d'appui de la tête contre la pièce à usiner comportent des premiers ressorts (33, 34) s'appuyant d'une part contre la tête et d'autre part dans un logement (35, 36) pratiqué dans chacun des éléments supérieur et inférieur, et que les moyens élastiques de soutien de la tête avec ses moyens de liaison comportent au moins un second ressort (39) situé dans un logement (40) pratiqué dans le socle et appuyant contre l'élément supérieur pour compenser le poids de la tête avec ses moyens de liaison.

5. Dispositif selon la revendication 4, caractérisé par le fait que les premiers moyens de guidage sont des lames élastiques (47, 48, 49, 50) disposées par paires, la première paire (47, 48) reliant l'élément supérieur (25) à la tête et la seconde paire (49, 50) reliant l'élément inférieur (26) à ladite tête, la tête et les éléments supérieur et inférieur étant munis de talons (55, 56, 57, 58) limiteurs de course.

6. Dispositif selon la revendication 4, caractérisé par le fait que les seconds moyens de guidage sont chacun une lame élastique (61, 62), la première lame (62) reliant l'élément supérieur au socle solidaire du bâti de la machine, la seconde lame (61) reliant l'élément inférieur audit socle, lesdits éléments supérieur et inférieur et ledit socle étant munis de talons (63, 64, 65, 66) limiteurs de course.

7. Dispositif selon la revendication 4, caractérisé par le fait que les logements (35, 36) pratiqués dans chacun des éléments supérieur et inférieur et recevant les premiers ressorts (33, 34) comportent une vis (37, 38) pour permettre le réglage de la force d'appui de la tête contre la pièce à usiner.

8. Dispositif selon la revendication 4, caractérisé par le fait que le logement (40) pratiqué dans le socle et recevant le second ressort (39) comporte une vis (41) pour permettre le réglage de la force de soutien compensant le poids de la tête avec ses moyens de liaison.

9. Dispositif selon la revendication 4, caractérisé par le fait que la tête (5), les éléments supérieur (25) et inférieur (26) et le socle (22) sont assemblés au moyen de vis.

Fig.1

Fig.2

Fig. 3

Fig. 4

Fig. 5

Fig. 6

# RAPPORT DE RECHERCHE EUROPEENNE

Numéro de la demande

**EP 91 11 2366**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | DE-B-1 502 477   (LANDIS TOOL CO.)<br>* colonne 2, ligne 21 - colonne 4, ligne 3; figures 1-3 *<br>— — — | 1,3-6,9 | B 24 B 49/04 |
| X,D | GB-A-1 099 692   (THE NEWALL ENGINEERING COMPANY LIMITED)<br>* le document en entier *<br>— — — | 1,2,4,7-9 | |
| A | FR-A-2 050 140   (LITTON INDUSTRIES, INC.)<br>* page 4, ligne 1 - page 6, ligne 4; figures 3, 4, 7 *<br>— — — | 1-9 | |
| A | US-A-2 603 043   (M. BONTEMPS)<br>* le document en entier *<br>— — — | 1-3 | |
| A,D | FR-A-2 570 487   (MESELTRON S.A.)<br>* page 3, ligne 3 - page 4, ligne 2; figures 1, 2 *<br>— — — — — | 1 | |

**DOMAINES TECHNIQUES RECHERCHES (Int. Cl.5)**

B 24 B

**Le présent rapport de recherche a été établi pour toutes les revendications**

| Lieu de la recherche | Date d'achèvement de la recherche | Examinateur |
|---|---|---|
| Berlin | 25 octobre 91 | CUNY J M J C |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
 
& : membre de la même famille, document correspondant